(19) Europäisches Patentamt / European Patent Office / Office européen des brevets

(11) **EP 2 667 368 A1**

(12) **DEMANDE DE BREVET EUROPEEN**

(43) Date de publication:
**27.11.2013 Bulletin 2013/48**

(51) Int Cl.:
***G09B 19/00*** *(2006.01)*

(21) Numéro de dépôt: **13168646.1**

(22) Date de dépôt: **22.05.2013**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **23.05.2012 FR 1254726**

(71) Demandeur: **BABOLAT VS**
**69007 Lyon (FR)**

(72) Inventeur: **Mace, Pierre**
**69007 Lyon (FR)**

(74) Mandataire: **Myon, Gérard Jean-Pierre et al**
**Cabinet Lavoix**
**62, rue de Bonnel**
**69003 Lyon (FR)**

(54) **Méthode de calcul d'un indice de répétabilité lors de l'utilisation d'une raquette de tennis**

(57) Cette méthode de calcul d'un indice de répétabilité (S) des gestes et frappes d'un joueur frappant une balle de tennis avec une raquette comprend :
- une étape préalable a), dans laquelle des données comportementales (D1) de la raquette sont générées lors de tests, indiquant, en fonction de paramètres incluant au moins plusieurs types de coups, des premières données de jeu (D2) relatives aux gestes et aux frappes,
- une étape de jeu b), dans laquelle sont mesurées des secondes données de jeu (D2),
- une étape d'analyse c), dans laquelle :
- on compare les secondes données de jeu (D2) avec les données comportementales (D1),
- on déduit, pour chaque frappe réalisée lors de l'étape de jeu b), le type de coup, et
- pour chaque type de coup, on détermine la valeur de l'indice de répétabilité (S) des gestes et des frappes du joueur, en comparant les secondes données de jeu (D2) entre elles.

*Fig.1*

**Description**

La présente invention concerne une méthode de calcul d'un indice de répétabilité des gestes et frappes d'un joueur frappant une balle de tennis au moyen d'une raquette.

Lorsqu'un joueur pratique le tennis, il est avantageux de pouvoir analyser ses performances, par exemple dans le but d'évaluer et/ou d'améliorer sa technique de jeu. Le niveau du joueur se caractérise notamment par sa capacité à effectuer des gestes et des frappes de manière reproductible. En effet, plus un joueur aura de maitrise technique et plus il parviendra, lorsqu'il le souhaite, à réaliser un geste toujours identique, notamment au cours d'entrainements pendant lesquels il réalise à chaque frappe le même type de coup.

L'invention propose une méthode de calcul d'un indice de mesure de la répétabilité des gestes et des frappes du joueur, basée sur des données de jeu mesurées.

A cet effet, l'invention à pour objet une méthode de calcul d'un indice de répétabilité des gestes et des frappes d'un joueur frappant une balle de tennis avec une raquette, qui comprend :

- une étape préalable a), dans laquelle des données comportementales de la raquette sont générées lors de tests, les données comportementales indiquant, en fonction de paramètres incluant au moins plusieurs types de coups, des premières données de jeu relatives aux gestes et aux frappes, telles que les vibrations, l'accélération linéaire et la vitesse angulaire de la raquette,
- une étape de jeu b), dans laquelle le joueur frappe des balles avec la raquette et dans laquelle sont mesurées des secondes données de jeu relatives aux gestes et aux frappes du joueur, telles que les vibrations, l'accélération linéaire et la vitesse angulaire de la raquette,
- une étape d'analyse c), dans laquelle

  - on compare les secondes données de jeu avec les données comportementales,
  - on déduit, pour chaque frappe réalisée lors de l'étape de jeu b), le type de coup, et
  - pour chaque type de coup, on détermine la valeur de l'indice de répétabilité des gestes et des frappes du joueur, en comparant les secondes données de jeu entre elles, l'indice de répétabilité indiquant la capacité du joueur à répéter de manière identique le type de coup.

Grâce à l'invention, les données mesurées permettent d'obtenir un indice de répétabilité qui est un indicateur des performances du joueur lui permettant de s'évaluer et de progresser.

Selon des aspects avantageux mais non obligatoires de l'invention, une telle méthode peut incorporer une ou plusieurs des caractéristiques suivantes, prises dans toute combinaison techniquement admissible :

- Lors de l'étape préalable a) et de l'étape de jeu b), les données comportementales et les données de jeu sont obtenues en mesurant les vibrations, la vitesse angulaire et l'accélération linéaire de la raquette.
- L'indice de répétabilité est déterminé en comparant pour les coups de même type réalisés lors de l'étape de jeu b), les mesures brutes du système de mesure, à savoir des signaux de sortie de capteurs fixés à la raquette et relatifs de préférence aux vibrations, à l'accélération linéaire et à la vitesse angulaire de la raquette.
- L'indice de répétabilité est déterminé en comparant pour chaque coup de même type réalisé lors de l'étape de jeu b), au moins un premier paramètre obtenu à partir des mesures du système de mesure, à savoir à partir de signaux de sortie de capteurs fixés à la raquette et relatifs de préférence aux vibrations, à l'accélération linéaire et à la vitesse angulaire de la raquette. Un tamis de la raquette est divisé en plusieurs zones. Le premier paramètre est relatif à la zone d'impact de la balle sur le tamis. L'indice de répétabilité est exprimé en fonction d'une première variable relative à la dispersion, autour d'une première valeur moyenne, du premier paramètre.
- L'indice de répétabilité est déterminé en comparant pour chaque coup de même type réalisé lors de l'étape de jeu b), au moins un paramètre, dit second, obtenu à partir des mesures du système de mesure, à savoir à partir de signaux de sortie de capteurs fixés à la raquette et relatifs de préférence aux vibrations, à l'accélération linéaire et à la vitesse angulaire de la raquette. Le deuxième paramètre est relatif à l'angle d'orientation du tamis. L'indice de répétabilité est exprimé en fonction d'une variable, dite deuxième, relative à la dispersion, autour d'une valeur moyenne, dite deuxième, du deuxième paramètre.
- L'indice de répétabilité est déterminé en comparant pour chaque coup de même type réalisé lors de l'étape de jeu b), au moins un paramètre, dit troisième, obtenu à partir des mesures du système de mesure, à savoir à partir de signaux de sortie de capteurs fixés à la raquette et relatifs de préférence aux vibrations, à l'accélération linéaire et à la vitesse angulaire de la raquette. Le troisième paramètre est relatif à la quantité d'effet imprimée à la balle. L'indice de répétabilité est exprimé en fonction d'une variable, dite troisième, relative à la dispersion, autour d'une valeur moyenne, dite troisième, du troisième paramètre.
- L'indice de répétabilité comprend au moins trois termes additionnés, chaque terme étant fonction de l'une des variables.
- Chaque variable est un écart-type ou un coefficient de variation.

- Chaque variable est corrigée par un coefficient de réglage qui norme la variable pour la ramener sur une échelle pour laquelle toutes les balles sont frappées de manière identique.
- La méthode comprend en outre des étapes dans lesquelles :

  - des essais sont réalisés pour comparer des frappes de joueurs de haut niveau et de niveau plus faible,
  - en fonction de ces essais, chaque variable est corrigée par un coefficient de pondération qui hiérarchise les variables en fonction de leur pertinence.

L'invention sera mieux comprise et d'autres avantages de celle-ci apparaîtront plus clairement à la lumière de la description qui va suivre d'une méthode de mesure conforme à l'invention, donnée uniquement à titre d'exemple et faite en référence aux dessins annexés dans lesquels :

- la figure 1 est une vue de face d'une raquette permettant la mise en oeuvre de la méthode de l'invention ; et

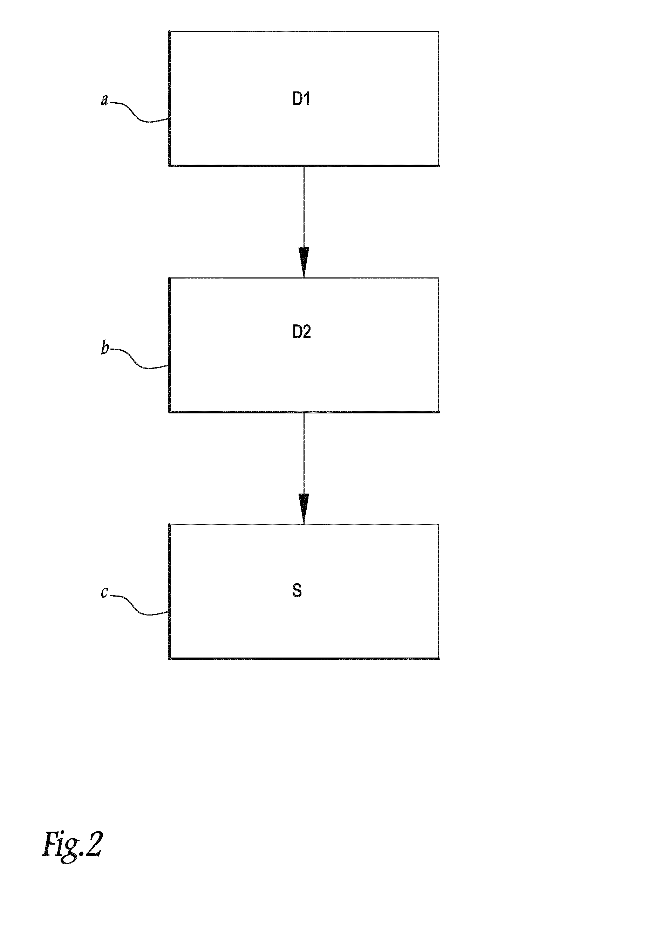

- la figure 2 est un schéma de la méthode de l'invention.

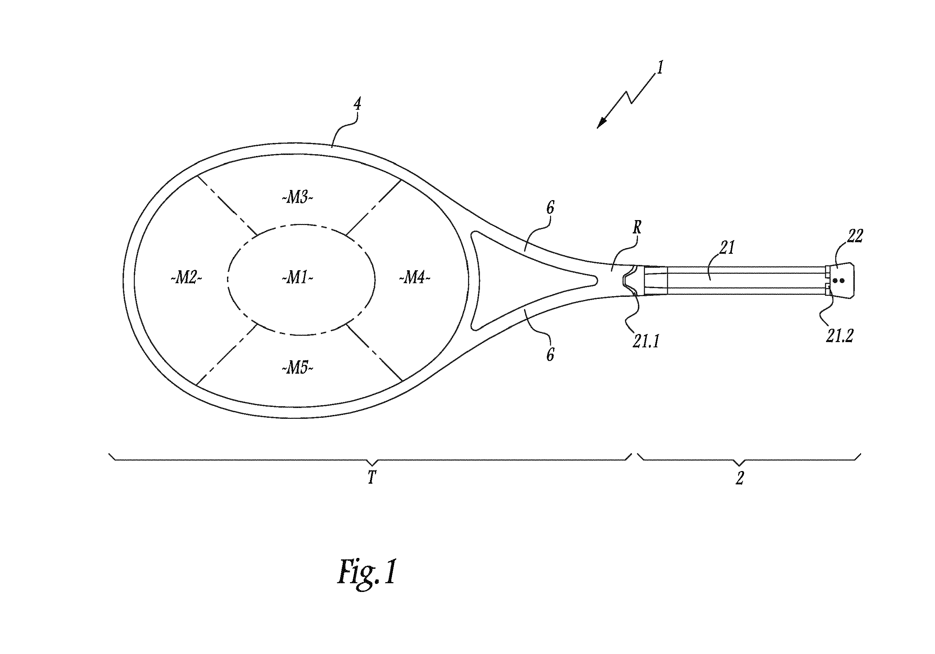

La figure 1 montre une raquette de tennis 1 classique, qui comprend de manière classique un manche 2 raccordé à une tête T incluant un cadre 4 à l'intérieur duquel est tendu un tamis 8, formé de différentes cordes transversales et longitudinales. La tête T comprend également deux branches de liaison 6 qui s'étendent de manière divergente depuis le manche 2 vers le cadre 4.

Le manche 2 comprend un corps 21 globalement tubulaire, réalisé par exemple en carbone. De manière classique, le corps 21 est recouvert d'une épaisseur de mousse entourée par un grip, pour améliorer la prise en main du manche. Le corps 21 du manche 2 comporte une extrémité longitudinale proximale 21.1, située du côté du tamis 8 et raccordée aux branches de liaison 6, et une extrémité longitudinale distale 21.2, libre et opposée à l'extrémité 21.1. L'extrémité 21.2 est recouverte par un talon 22, généralement désigné par le terme « butt cap » en anglais, qui permet à la main du joueur de ne pas glisser hors du manche 2.

La raquette 1 est équipée d'un système de mesure de données de jeu, non représenté, comprenant au moins un capteur de mesure, par exemple un capteur de vibrations.

En variante, le système de mesure des données de jeu ne fait pas partie de la raquette 1. Par exemple, il peut s'agir d'une caméra qui filme le joueur.

Le système de mesure permet de déterminer l'accélération linéaire et la vitesse angulaire de la raquette, selon trois directions perpendiculaires entre elles, fixes par rapport au référentiel terrestre.

La suite de la description concerne une méthode de mesure et de calcul d'un indice de répétabilité S, au moyen de la raquette 1.

Dans une étape préalable a), des données de jeu sont mesurées par le système de mesure, lors de tests préalables, lorsqu'un joueur réalise des types de coups spécifiques (coup droit lifté, service, revers slicé...).

Chaque frappe est caractérisée par plusieurs paramètres. Par exemple, un premier paramètre est le type de coup (coup droit, revers ou service), déterminé en fonction des accélérations linéaires de la raquette 1 et de ses vitesses angulaires.

Un deuxième paramètre est le type et la quantité d'effet (lift, slice ou coup à plat), déterminé en fonction du rapport entre la vitesse angulaire du mouvement ascendant et du mouvement d'avance de la raquette 1, juste avant la frappe.

Un troisième paramètre est la puissance de frappe, déterminée au moment de la frappe, en fonction des accélérations linéaires et des vitesses angulaires de la raquette.

Un quatrième paramètre est la localisation de la zone d'impact de la balle sur le tamis 8, déterminée en fonction des mesures des trois capteurs 14.1, 14.2, 14.3. Le tamis 8 peut être divisé en plusieurs zones représentées à la figure 1 : une zone centrale M1, globalement circulaire, et quatre zones périphériques M2, M3, M4 et M5 qui divisent la partie restante du tamis 8 en quatre quartiers : un quartier avant M2 situé entre la zone centrale M1 et l'extrémité du cadre 4 opposée au manche 2, un quartier arrière M4 situé entre la zone centrale M1 et la partie du cadre 4 reliée aux branches de liaison 6, et deux quartiers latéraux M3 et M4 situés de part et d'autre de la zone centrale M1, entre les quartiers avant M2 et arrière M4. En variante, le découpage des zones et le nombre de zones peut être différent.

Lors de l'étape préalable a), on génère des données comportementales D1 de la raquette 1 qui indiquent, en fonction des paramètres des gestes et frappes du joueur, les données de jeu mesurées par le système de mesure. Les données comportementales D1 sont stockées dans une mémoire d'un poste d'analyse, par exemple un ordinateur, un téléphone intelligent ou une tablette graphique. Les données comportementales D1 indiquent par exemple, pour chaque paramètre, les vibrations, l'accélération linéaire et la vitesse angulaire de la raquette 1.

Par ailleurs, lors de l'étape préalable a), on établit une relation entre, d'une part, les écarts entre les données comportementales D1 relatives à un même type de coup (coup droit lifté, revers slicé, service...) et, d'autre part, la valeur de l'indice de répétabilité S. Ceci permet d'étalonner l'indice de répétabilité S, c'est-à-dire de le ramener sur une échelle dont la valeur maximale correspond à un joueur virtuel qui frappe toutes les balles du même type de la même manière.

L'étape préalable a) est réalisée une seule fois.

Puis, dans une étape de jeu b), le joueur frappe des balles, pendant que le système de mesure des données de jeu mesure des données de jeu D2 relatives aux gestes et aux frappes du joueur, par exemple la vibration, la vitesse angulaire et l'accélération linéaire de la raquette 1. Dans une première sous-étape c1) faisant partie d'une étape d'analyse c), le poste d'analyse compare les données de jeu D2 mesurées lors de l'étape de jeu b) avec les données comportementales D1 mesurées lors de l'étape préalable a), et en déduit, pour chaque frappe de l'étape de jeu b), le type de coup (coup droit lifté, revers slicé, service...).

Lors d'une seconde sous-étape c2) faisant partie de l'étape d'analyse c), le poste d'analyse détermine, à partir de la comparaison réalisée lors de la sous-étape c1), la valeur d'un indice de répétabilité S des gestes et frappes du joueur. L'indice de répétabilité S est calculé pour la série de frappes de l'étape de jeu b) et caractérise la capacité du joueur à effectuer des gestes et des frappes de manière reproductible. L'indice de répétabilité S est un indicateur du niveau technique du joueur.

Dans un premier mode de réalisation de la méthode de calcul, lors de la sous-étape c2), l'indice de répétabilité S est déterminé au moyen de l'étalonnage réalisé lors de l'étape préalable a), en comparant directement, pour chaque type de frappe de la série, les données de jeu D2 relatives au frappes appartenant à ce type de frappe. Par « directement », on entend que l'indice de répétabilité S est déterminé en comparant les mesures brutes du système de mesure des données de jeu. Par exemple, les mesures brutes sont notamment des signaux de sortie de capteurs fixés à la raquette 1.

Plus l'écart entre les frappes de même type est faible, et plus le niveau technique du joueur est important. Les données de jeu D2 relatives à un même type de frappe sont comparées entre elles pour plusieurs instants successifs du geste accompagnant chaque frappe. Le poste d'analyse synchronise entre elles les données de jeu D2 relatives à un même type de frappe, c'est-à-dire qu'il établit une correspondance entre des instants successifs analogues de plusieurs frappes du même type, réalisées par le joueur lors de l'étape de jeu b).

La suite de la description concerne un deuxième mode de réalisation de la méthode de calcul, dans lequel, lors de la sous-étape c2), l'indice de répétabilité S est déterminé en comparant indirectement les données de jeu D2 entre elles, c'est-à-dire que l'indice de répétabilité S est déterminé au moyen d'un algorithme de traitement des données de jeu D2.

L'indice de répétabilité S est pas exemple calculé à partir d'un algorithme basé sur trois paramètres P1, P2 et P3 obtenus à partir des mesures du système de mesure : un premier paramètre P1, relatif à la localisation de la zone d'impact M1 à M5 de la balle sur le tamis 8, un deuxième paramètre P2, relatif à l'angle d'orientation du tamis 8 au moment de la frappe, et un troisième paramètre P3, relatif à la quantité d'effet transmise à la balle.

Comme expliqué précédemment, ces trois paramètres P1, P2 et P3 sont déterminés par comparaison des données de jeu D2 avec les données comportementales D1.

Les paramètres P1, P2 et P3 sont obtenus par exemple en analysant les vibrations, l'accélération linéaire et la vitesse angulaire de la raquette 1.

L'indice de répétabilité S indique pour la série de frappes réalisées lors de l'étape de jeu b) et sur une échelle donnée, par exemple de 0 à 10, les variations de chaque paramètre P1, P2 et P3, et s'exprime par exemple sous la forme suivante :

$$S = 10.(A1.B1.C1 + A2.B2.C2 + A3.B3.C3)$$

L'indice de répétabilité S comprend trois termes additionnés, chaque terme étant fonction d'une variable C1, C2 ou C3 représentant la dispersion de chaque paramètre P1, P2 et P3 par rapport à sa valeur moyenne m1, m2 et m3.

Par exemple, C1 est l'écart-type $\sigma1$ des probabilités d'impact dans les différentes zones M1 à M5 du tamis 8. Le niveau du joueur est bon lorsque la balle impacte le tamis 8 toujours dans la même zone, généralement la zone centrale M1.

Pour calculer l'écart-type $\sigma1$, on calcule pour chaque zone M1 à M5 le nombre total de fois n1, n2, n3, n4 ou n5 où la balle à frappé cette zone. La somme des nombres n1 à n5 est égale au nombre total de frappes N (n1 + n2 + n3 + n4 + n5 = N).

On calcule ensuite la probabilité d'impact p1 à p5 de la balle dans chaque zone M1 à M5. Par exemple, pour la première zone M1, la probabilité p1 est égale au nombre de fois n1 où la balle à frappé la zone M1, divisé par le nombre total de frappes N. Par exemple, on peut avoir p1 = 0,55, ce qui signifie que 55% des balles frappées ont impacté la zone Z1.

La somme des probabilités d'impact p1 à p5 est égale à 1. Par exemple, p1 = 0,55, p2 = 0,3, p3 =0,05, p4 = 0,05 et p5 = 0,05.

L'écart-type $\sigma1$ est l'écart-type des probabilités d'impact p1 à p5. Dans l'exemple donné, l'écart-type $\sigma1$ est égal à 0,2.

Les termes C1, C2 et C3 ne sont pas forcément des écart-types. Il peut s'agir d'un autre indicateur de la dispersion des probabilités, par exemple le coefficient de variation, qui est l'écart-type divisé par la moyenne.

Les termes A1, A2 et A3 sont des coefficients de pondération des paramètres P1, P2 et P3.

En comparant un grand nombre de frappes de joueurs de haut niveau et de niveau plus faible, il ressort que les paramètres P1, P2 et P3 ne sont pas tous aussi importants les uns que les autres pour représenter la répétabilité des coups du joueur. En fonction de ces essais, on peut par exemple pondérer les paramètres de la manière suivante, pour les hyérarchiser : 40% pour le paramètre P1, 40% pour le paramètre P2 et 20% pour le paramètre P3. Dans cet exemple, A1 = 0,4, A2 = 0,4 et A3 = 0,2. Pour ne pas biaiser le paramètre de répétabilité P, il faut que la somme des indices de pondération soit égale à 1.

Les termes B1, B2 et B3 sont des coefficients de réglage des paramètres P1, P2 et P3 permettant de normer les termes C1, C2 et C3, c'est-à-dire d'étalonner l'indice de répétabilité S pour le ramener sur une échelle dont la valeur maximale correspond aux performances virtuelles d'un joueur qui frappe toutes les balles du même type de la même manière.

Par exemple, pour le terme C1, l'écart-type $\sigma 1$ n'est pas le même en fonction du nombre de zones M1 à M5 qui divisent le tamis. En effet, plus le nombre de zones M1 à M5 est grand et plus il est difficile pour le joueur de frapper la balle toujours dans la même zone. Par exemple, le terme B1 est défini par la relation B1 = $1/\sigma_M$, avec $\sigma_M$ l'écart-type des probabilités d'impact p1 à p5 d'un jeu parfait, pour lequel la balle frappe uniquement la zone M1 (p1 = 1 et p2 = p3 = p4 = p5 = 0). Dans l'exemple donné, $\sigma_M = 0,44$ et B1 = $1/0,44 \approx 2.272$.

Le même principe s'applique pour normer les termes C2 et C3.

L'indice de répétabilité S indique ainsi une mesure, sur une échelle de 0 à 10, de la capacité d'un joueur à répéter ses frappes d'un même type de manière identique.

## Revendications

1. Méthode de calcul d'un indice de répétabilité (S) des gestes et frappes d'un joueur frappant une balle de tennis avec une raquette (1), **caractérisée en ce qu'**elle comprend :

- une étape préalable a), dans laquelle des données comportementales (D1) de la raquette (1) sont générées lors de tests, les données comportementales (D1) indiquant, en fonction de paramètres incluant au moins plusieurs types de coups, des premières données de jeu (D2) relatives aux gestes et aux frappes, telles que les vibrations, l'accélération linéaire et la vitesse angulaire de la raquette,
- une étape de jeu b), dans laquelle le joueur frappe des balles avec la raquette et dans laquelle sont mesurées des secondes données de jeu (D2) relatives aux gestes et aux frappes du joueur, telles que les vibrations, l'accélération linéaire et la vitesse angulaire de la raquette,
- une étape d'analyse c), dans laquelle :

- on compare les secondes données de jeu (D2) avec les données comportementales (D1),

- on déduit, pour chaque frappe réalisée lors de l'étape de jeu b), le type de coup, et
- pour chaque type de coup, on détermine la valeur de l'indice de répétabilité (S) des gestes et des frappes du joueur, en comparant les secondes données de jeu (D2) entre elles, l'indice de répétabilité indiquant la capacité du joueur à répéter de manière identique le type de coup.

2. Méthode de calcul selon la revendication 1, **caractérisé en ce que** lors de l'étape préalable a) et de l'étape de jeu b), les données comportementales (D1) et les données de jeu (D2) sont obtenues en mesurant les vibrations, la vitesse angulaire et l'accélération linéaire de la raquette (1).

3. Méthode de calcul selon l'une des revendications précédentes, **caractérisée en ce que** l'indice de répétabilité (S) est déterminé en comparant pour les coups de même type réalisés lors de l'étape de jeu b), les mesures brutes du système de mesure, à savoir des signaux de sortie de capteurs fixés à la raquette 1 et relatifs de préférence aux vibrations, à l'accélération linéaire et à la vitesse angulaire de la raquette (1).

4. Méthode de calcul selon l'une des revendications 1 ou 2, **caractérisée en ce que** l'indice de répétabilité (S) est déterminé en comparant pour chaque coup de même type réalisé lors de l'étape de jeu b), au moins un premier paramètre (P1) obtenu à partir des mesures du système de mesure, à savoir à partir de signaux de sortie de capteurs fixés à la raquette et relatifs de préférence aux vibrations, à l'accélération linéaire et à la vitesse angulaire de la raquette (1), **en ce qu'**un tamis (8) de la raquette (1) est divisé en plusieurs zones (M1-M5), **en ce que** le premier paramètre (P1) est relatif à la zone d'impact (M1-M5) de la balle sur le tamis (8), et **en ce que** l'indice de répétabilité (S) est exprimé en fonction d'une première variable (C1) relative à la dispersion, autour d'une première valeur moyenne (m1), du premier paramètre (P1).

5. Méthode de calcul selon l'une des revendications 1, 2 ou 4, **caractérisée en ce que** l'indice de répétabilité (S) est déterminé en comparant pour chaque coup de même type réalisé lors de l'étape de jeu b), au moins un paramètre (P2), dit second, obtenu à partir des mesures du système de mesure, à savoir à partir de signaux de sortie de capteurs fixés à la raquette et relatifs de préférence aux vibrations, à l'accélération linéaire et à la vitesse angulaire de la raquette, **en ce que** le deuxième paramètre (P2) est relatif à l'angle d'orientation du tamis (8), et **en ce que** l'indice de répétabilité (S) est exprimé en fonction d'une variable (C2), dite deuxième, relative à la dispersion, autour d'une valeur moyenne (m2), dite deuxième, du deuxième paramètre (P2).

6. Méthode de calcul selon l'une des revendications 1, 2, 4 ou 5, **caractérisée en ce que** l'indice de répétabilité (S) est déterminé en comparant pour chaque coup de même type réalisé lors de l'étape de jeu b), au moins un paramètre (P3), dit troisième, obtenu à partir des mesures du système de mesure, à savoir à partir de signaux de sortie de capteurs fixés à la raquette et relatifs de préférence aux vibrations, à l'accélération linéaire et à la vitesse angulaire de la raquette,
   **en ce que** le troisième paramètre (P3) est relatif à la quantité d'effet imprimée à la balle et **en ce que** l'indice de répétabilité (S) est exprimé en fonction d'une variable (C3), dite troisième, relative à la dispersion, autour d'une valeur moyenne (m3), dite troisième, du troisième paramètre (P3).

7. Méthode de calcul selon les revendications 4 à 6 prises en combinaison, **caractérisée en ce que** l'indice de répétabilité (S) comprend au moins trois termes additionnés, chaque terme étant fonction de l'une des variables (C1, C2, C3).

8. Méthode de calcul selon les revendications 4 à 6 prises en combinaison, **caractérisée en ce que** chaque variable (C1, C2, C3) est un écart-type ou un coefficient de variation.

9. Méthode de calcul selon les revendications 4 à 6 prises en combinaison, **caractérisée en ce que** chaque variable (C1, C2, C3) est corrigée par un coefficient de réglage (B1, B2, B3) qui norme la variable (C1, C2, C3) pour la ramener sur une échelle pour laquelle toutes les balles sont frappées de manière identique.

10. Méthode de calcul selon les revendications 4 à 6 prises en combinaison, **caractérisée en ce qu'**elle comprend en outre des étapes dans lesquelles :

   - des essais sont réalisés pour comparer des frappes de joueurs de haut niveau et de niveau plus faible,
   - en fonction de ces essais, chaque variable (C1, C2, C3) est corrigée par un coefficient de pondération (A1, A2, A3) qui hiérarchise les variables (C1, C2, C3) en fonction de leur pertinence.

*Fig.1*

*Fig.2*

Europäisches
Patentamt

European
Patent Office

Office européen
des brevets

**RAPPORT DE RECHERCHE EUROPEENNE**

Numéro de la demande

EP 13 16 8646

| | **DOCUMENTS CONSIDERES COMME PERTINENTS** | | |
|---|---|---|---|
| Catégorie | Citation du document avec indication, en cas de besoin, des parties pertinentes | Revendication concernée | CLASSEMENT DE LA DEMANDE (IPC) |
| X | US 2005/288119 A1 (WANG HONGCHUAN [US] ET AL) 29 décembre 2005 (2005-12-29) * le document en entier, en particulier les paragraphes [0011], [0016] et [0023] * ----- | 1-10 | INV. G09B19/00 |
| A | US 2005/054457 A1 (EYESTONE RICHARD D [US] ET AL) 10 mars 2005 (2005-03-10) * le document en entier * ----- | 1-10 | |

**DOMAINES TECHNIQUES RECHERCHES (IPC)**

G09B

Le présent rapport a été établi pour toutes les revendications

| Lieu de la recherche | Date d'achèvement de la recherche | Examinateur |
|---|---|---|
| Munich | 23 juillet 2013 | Lerbinger, Klaus |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 13 16 8646

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

23-07-2013

| Document brevet cité au rapport de recherche | Date de publication | Membre(s) de la famille de brevet(s) | Date de publication |
|---|---|---|---|
| US 2005288119 A1 | 29-12-2005 | US 2005288119 A1<br>WO 2006004908 A2 | 29-12-2005<br>12-01-2006 |
| US 2005054457 A1 | 10-03-2005 | AUCUN | |

EPO FORM P0460

Pour tout renseignement concernant cette annexe : voir Journal Officiel de l'Office européen des brevets, No.12/82